# NEW EUROPEAN PATENT SPECIFICATION

(11) **EP 3 275 345 B2**
(45) Date of publication and mention of the opposition decision: **22.02.2023**
(45) Mention of the grant of the patent: 13.03.2019
(21) Application number: 16188693.2
(22) Date of filing: 14.09.2016
(51) Int. Cl.: A47J 31/44, A47J 31/52

(54) **MACHINE AND ELECTRONIC DEVICE FOR PERSONALIZED BEVERAGE PREPARATION**
MASCHINE UND ELEKTRONISCHE VORRICHTUNG FÜR PERSONALISIERTE GETRÄNKEZUBEREITUNG
MACHINE ET DISPOSITIF ÉLECTRONIQUE DE PRÉPARATION DE BOISSON PERSONNALISÉE

(30) Priority: 25.07.2016 EP 16180955
(43) Date of publication of application: 31.01.2018
(73) Proprietor: Société des Produits Nestlé S.A., 1800 Vevey (CH)
(72) Inventor: MAGATTI, Marco, 1010 Lausanne (CH)
(74) Representative: Rupp, Christian

(56) References cited:
- WO-A1-2015/062272
- WO-A1-2015/148089
- WO-A1-2017/085020
- US-A1- 2015 351 581
- US-A1- 2016 130 068

## Description

### Field of the invention

The present invention relates to a beverage preparation machine and to a system for preparing a variety of beverages according to optimized and/or personalized beverage process parameters.

### Background of the invention

Beverage preparation machines for preparation of a beverage by means of a beverage ingredients containing cartridge such as a coffee capsule are well-known in the prior art. These beverage preparation machines are usually equipped with a liquid supply circuit for injecting liquid such as heated and/or pressurized water into the cartridge that is held in a dedicated receiving chamber of the machine. Upon provision of liquid into the cartridge, the liquid is made to interact with the beverage ingredients of the cartridge, e.g. by means of dissolution and/or extraction, and the resulting beverage is then made to leave the cartridge in order for being provided to a receptacle. The cartridge is usually designed for providing a single-serving of beverage therefrom.

Examples for such beverage preparation machines are described in EP 0521397, EP1764014, and WO2009/113035. The increased popularity of these machines is attributed to enhanced user convenience compared to conventional beverage preparation machines such as in particular a manually operated coffee machine. Thereby, by contrast to such manually operated coffee machines, the user merely has to insert a beverage cartridge into the machine and press a dedicated start button in order to conveniently prepare a single serving of the desired beverage without further actions.

In view of the popularity of these machines, there is an increased desire for enabling the preparation of optimized and/or personalized beverages, which satisfy the personal taste preferences and sensory profile of a user. This is in particular a need of coffee or tea connoisseurs who would like to obtain a personalized beverage by use of a convenient beverage preparation method. The known beverage preparation machines do however not overcome this problem as they merely enable the preparation of a beverage according to predefined standard parameters that may not be conveniently altered by the user of the machine.

It is therefore an aim of the present invention to provide an enhanced beverage preparation machine and system that overcomes the above-indicated drawbacks of the prior art and which enables the preparation of a variety of beverages according to optimized and/or personalized beverage process parameters while at the same time providing enhanced user convenience.

The present invention seeks to address the above-described problem. The invention also aims at other objects and particularly the solution of other problems as will appear in the rest of the present description.

WO 2015/148089 A1 describes beverage dispensers capable of producing customized beverages. In one embodiment, the beverage dispenser is able to communicate with a personal device such as a smartphone, which can then be used as a user interface to directly control the beverage dispenser by dictating brewing parameter to the beverage dispenser. In another, alternative, embodiment, the controller of the beverage dispenser is capable of identifying the type of pod installed in the beverage dispenser and controlling the beverage dispenser in accordance with the type of beverages being prepared.

US 2016/0130068 A1 describes a machine for preparing infant formula milk from capsules. The machine identifies the content of the capsule from a code, for example a barcode, present on the capsule. The preparation parameters for the preparation of the infant formula milk are retrieved based on the result of the capsule content identification.

US 2015/0351581 A1 describes a network connected coffee maker, wherein the user is identified and coffee is prepared according to recipe parameters specific to the user.

### Summary of the invention

In a first aspect, the invention relates to a beverage preparation machine for preparing a variety of beverages according to optimized and/or personalized beverage process parameters, the machine comprising a brewing chamber for receiving a beverage-ingredients containing cartridge and recognition means designed to interact with the cartridge, a control unit operable to execute a beverage preparation process according to beverage process parameters in order to prepare a beverage by injection of liquid into the cartridge, a network unit connected to the control unit and designed for communicating with at least one external electronic device, wherein the control unit is designed to selectively operate at least in two different modes for setting the beverage process parameters based on cartridge data provided by the cartridge recognition means and/or based on data provided by the at least one electronic device networked to the machine.

The present invention enables the preparation of a variety of different beverages according to optimized and/or personalized beverage process parameters due to the at least two different modes of the control unit and the provided network unit by means of which the machine may be connected to the at least one external electronic device such as an external control device or an external storage device.

The machine is preferably void of a complex user interface and thus, the machine may be conveniently controlled via the dedicated external electronic control device such as a handheld device, e.g. a smartphone, a tablet or a stand-alone control unit connectable to the beverage preparation machine. The user interface for controlling the beverage preparation process is thus preferably provided at the external electronic control device. For this purpose, the electronic control device may comprise a dedicated computer program respectively an application ("app") for conveniently enabling a control of the beverage preparation machine and which will be further described below.

The machine is preferably designed for injecting heated and/or pressurized liquid such as water into a cartridge held in a dedicated cartridge receiving chamber of the machine. For this purpose, the machine preferably comprises a liquid supply circuit with a pump, heating means and an injection element such as a needle able to selectively perforate an inlet face of the cartridge.

The machine is preferably designed for being used with cartridges of known type such as in particular coffee capsules containing a predefined variety and/or amount of coffee ingredients. The cartridges for being used with the machine may as well contain other beverage ingredients such as tea leaves or other food components. The machine may be preconfigured for operating in conjunction with different predefined cartridge varieties. In particular, the machine is preferably configured for operating in conjunction with between 10 to 30 different varieties of cartridges. These cartridge varieties preferably differ in their ingredients, for example in the type, preparation such as roasting grade and/or grinding degree, origin, blend and/or quantity of their ingredients. Preferably, each cartridge comprises a cartridge variety identifier designed for interacting with the recognition means of the machine in order to identify the variety of the cartridge. The cartridge variety identifier may be a machine readable code, for example a barcode, printed and/or embossed on the cartridge, a specific color of at least part of the cartridge exterior, a specific material of at least part of the cartridge and/or a specific outer geometric form of at least a part of the cartridge exterior.

The recognition means of the machine are designed to interact with the cartridge and preferably provide information to the control unit about a specific cartridge variety provided to the machine. This information is referred to as "cartridge data" within this application. The cartridge data may relate to a cartridge variety identifier such as a recognized colour, a recognized material, a read content of an RFID tag, a recognized geometrical shape of the cartridge, detected by the recognition means of the machine and combinations thereof. The recognition means may comprise a colour sensor, a code reader such as for example a barcode scanner, and/or resistive, magnetic or inductive means. It may for instance comprise a sensor sensitive to light, a camera, a resistive, magnetic and/or inductive sensor and/or a RFID reader. Additionally, the recognition means may comprise a presence or proximity sensor for identifying whether a cartridge is provided to the machine respectively to a dedicated cartridge receiving chamber.

In a preferred embodiment, the control unit is designed to set the beverage process parameters in a first mode based on the cartridge data only, and wherein in a second mode, the control unit is designed to set the beverage process parameters based on cartridge data and on data received by the at least one electronic device.

Optionally, the control unit is further designed to set the beverage process parameters in a default or regular mode, for example if no cartridge data is available or if the cartridge data does not correspond to known variety, for example if the variety identifier could not be read by the recognition means, if the cartridge variety could not be identified or if a cartridge of an unknown and/or new variety was identified.

The beverage process parameters relate to the process parameters used for preparing the beverage upon injection of liquid into the respective cartridge provided to the machine. The process parameters may encompass any one or a combination of: a temperature profile for driving heating means of the machine, a liquid pressure profile, a liquid flow rate profile, a liquid volume profile for driving a pump of the machine. The parameters profile(s) may be a constant or a value changing during the beverage preparation process. Accordingly, the beverage process parameters are suitable for controlling at least the temperature, the liquid pressure or flow rate, and the total volume of liquid provided to the cartridge during the beverage preparation process. Thereby, the temperature profile preferably comprises target values for the temperature of the heating means over time, i.e. over the duration of the respective beverage preparation process. The liquid pressure or respectively flow rate profile preferably comprises target values for the pressure or respectively flow rate of the liquid injected into the cartridge over time, and the liquid volume profile preferably comprises target values for the respective liquid volume delivered to the cartridge over time.

In the first mode, the control unit is preferably designed to retrieve a predefined parameter set from a storage unit of the machine in response to cartridge data only. Accordingly, the control unit preferably sets the beverage process parameters for beverage preparation upon injection of liquid into the respective cartridge in line with the retrieved parameter set. The retrieved parameter set is preferably a complete set of beverage process parameters to be used for beverage preparation with the respective recognised cartridge variety. The retrieved parameter set may as well be a set of parameters for adapting default values for the beverage preparation process with the respective recognised cartridge variety.

The respective parameter sets for being used in the first mode of the machine may be stored in a first look-up table by the storage unit of the machine. Said first look-up table of the storage unit may comprise multiple parameter sets for beverage preparation linked to respective predefined cartridge data. The first look-up table of the storage unit may thus comprise predefined parameter sets, whereby each of the parameter sets is linked to at least one specific cartridge variety as identified by the cartridge recognition means of the machine. The predefined parameter sets are preferably pre-configured by the manufacturer of the machine. The predefined parameter sets may be adjustable by means of the electronic control device connectable to the machine. The machine may as well be designed to automatically update the respective parameter sets in the storage unit or to add new parameter sets to the storage unit, e.g. in case of a release of new cartridge varieties on the market.

In the second mode, the control unit is preferably designed to retrieve a predefined parameter set from a storage unit of the machine based on cartridge data and to adapt or replace said parameter set based on the data provided by the at least one external electronic device. Hence, while the first mode of the control unit preferably enables the preparation of a beverage from a particular recognised cartridge variety based on pre-configured beverage process parameters only, the second mode of the control unit enables for an adjustment and/or replacement of the pre-configured process parameters in order to personalize the beverage preparation process for a particular cartridge variety.

The data provided by the at least one external electronic device may be a complete set of beverage process parameters for a particular cartridge variety, a set of parameters for adapting the pre-configured beverage process parameters for the respective cartridge variety and/or a reference data for referring to an additional, e.g. a second look-up table with multiple parameter sets for beverage preparation stored in the storage unit of the machine.

The control unit according to the invention is designed to automatically operate in its second mode by recognition of the at least one external electronic device, i.e. based on whether a connection to the at least one external electronic device is established. In case no connection to an external electronic device suitable for cooperation with the machine is present, the control.

In case the data provided by the external electronic device does not enable an attribution of beverage process parameters for the cartridge variety provided to the machine for beverage preparation, the control unit preferably operates in its first mode and thus uses the pre-configured beverage process parameters for the inserted cartridge variety. Accordingly, a user may personalize the beverage preparation process only for selected cartridge varieties, whereby for the rest of the cartridge varieties the machine will carry out a beverage preparation process based on pre-configured beverage parameters only.

The at least one external electronic device preferably comprises an electronic storage device such as an RFID tag, for example an NFC tag, on which data for beverage preparation is stored. The RFID tag is preferably designed for storing multiple parameter sets and/or a look-up table for assigning the multiple parameter sets to cartridge data such as predefined cartridge varieties. The data may be brewing parameter data such as liquid temperature profiles, pressure or flow rate profiles, liquid volume or brewer settings or cup settings or particular beverage type and/or style. The RFID tag may be integrated or attached to a beverage receptacle such as a coffee cup. In this case, the machine may be designed to automatically communicate with the electronic storage device upon placement of the receptacle in vicinity of the beverage preparation machine.

The control unit is preferably designed for communicating with the external electronic storage device and an external electronic control device. The external electronic control device may be a handheld device such as a smartphone or a tablet. The control unit is preferably designed for reconfiguring or replacing data stored on the external electronic storage device based on data provided by the external electronic control device and/or upon a user input at the machine. Accordingly, the external electronic control device may be used to attribute data for personalizing the beverage preparation process with a particular cartridge variety to the external electric storage device.

In a preferred embodiment, the control unit is designed to operate at least in a third mode dependent on the connection to the beverage preparation machine of a removable module for containing and/or preparing one or more beverage components, such as for example a milk module or milk frother, a hot water dispenser, etc. In this third mode, the control unit may be designed to retrieve beverage process parameters from a third look-up table stored e.g. by storage means of the removable module or by the storage unit of the beverage preparation machine. In this third mode, the beverage preparation machine is preferably designed for preparing a variety of multi-component beverages such as in particular coffee- and milk-based beverages, e.g. Cappuccino, Flat White, Latte macchiato and the like, and/or coffee- and hot water-based beverages, e.g. Americano.

The network unit of the beverage preparation machine is preferably designed for data transfer, preferably bidirectional data transfer between the control unit and the at least one external electronic device. The network unit preferably comprises a wireless interface such as a Wireless local area network (WLAN), a Bluetooth, WiFi, or a near-field-communication network interface and/or an RFID reader. The RFID reader is preferably designed to communicate with the external electronic storage device. The network unit may as well comprise a wired interface, such as at least one selected from a group consisting of: RS-232, USB, I2C, wired local area network interface or another suitable wired interface.

In a preferred embodiment, the beverage preparation machine is designed to automatically or upon user request obtain via the network unit a network connection to a remote resource such as a remote server, for example a cloud server, for data transfer. Hence, no active connection to an external electronic control device is required for the beverage preparation machine to communicate with a remote resource such as a remote server. When connected to the remote resource, the beverage preparation machine may selectively and/or automatically retrieve beverage preparation recipes comprising beverage process parameters from the remote resource. Accordingly, process parameters for various beverages to be prepared by the machine may be downloaded directly to the storage unit thereof. In addition, the pre-configured beverage process parameters for predefined cartridge varieties stored on the machine may be automatically altered or updated. Further, new beverage process parameters e.g. for new cartridge varieties to be released on the market may be downloaded to the storage unit of the machine.

The beverage preparation machine preferably comprises a user interface. The user interface preferably comprises at least a start/stop or start/pause button in order to selectively start or stop, or to selectively start or pause, a beverage preparation process, and/or an on/off switch. The user interface preferably comprises not more than 1-3 buttons. Accordingly, the complexity of the user interface at the machine is reduced. Further, a very compact machine as home appliance can be provided. In an alternative embodiment, the user interface may comprise a display or touch screen unit, for example a dot matrix display, a LCD, OLED or flexible display integrated in a housing of the beverage preparation machine. The display or touch screen unit may be designed for enabling a selection of a multitude of beverage types to be prepared. Optionally, the user interface may be designed for enabling a convenient selection of beverage types in particular in the third mode of operation of the machine when connected to a removable beverage module of the machine.

As mentioned above, the electronic control device connectable to the beverage preparation machine of the invention may comprise a dedicated computer program respectively an application ("app") for conveniently enabling a control of the beverage preparation machine, said program being for example configured to: obtain via a network unit of the electronic control device a network connection to a beverage preparation machine, display a control interface for receiving a plurality of inputs from a user in order to determine optimized and/or personalized beverage process parameters for a beverage preparation process with the beverage preparation machine, wherein the user inputs comprise the selection of a predefined beverage type out of a plurality of beverage types, and wherein the user inputs further comprise the setting of personalized beverage parameters for being transmitted to the beverage preparation machine and/or to an external electronic storage device connected to the machine. The beverage preparation machine is preferably a machine designed to prepare a beverage from a beverage-ingredients containing cartridge and designed to detect a particular predefined cartridge variety as described in detail here-above.

The computer program provides a convenient control of the beverage preparation machine in order to obtain an optimized and/or personalized beverage result for a particular beverage ingredients containing cartridge variety provided to the machine and without the user having to bother with complex setting of parameters at a dedicated user interface of the machine. Thereby, the computer program serves in particular to provide to the machine personalized beverage preparation parameters for the preparation of beverages.

The computer program preferably enables the remote control of the beverage preparation machine with the electronic control device. Thereby, the user may select a predefined beverage type out of a plurality of beverage types and the computer program may be designed for transmitting a dedicated activation or start signal to the machine automatically upon selection of the respective type or upon additional user input, which starts the beverage preparation process. The beverage types may comprise a variation of relatively simple beverages such as for example a "Ristretto", "Espresso" or "Lungo" coffee beverage which is to be prepared from a cartridge inserted into the machine. The beverage types preferably further comprise more complex multi-component beverages such as "Latte machiatto", "Flat white", "Americano", etc. The possibility of selecting the latter beverage types with the computer program may be dependent on the provision of an additional removable module such as a milk frother and/or a hot water dispenser to the beverage preparation machine.

In case no personalized beverage parameters are input by the user to the control interface, the beverage preparation process is preferably carried out according to pre-configured beverage process parameters of the respective beverage type, which may either be stored on storage means of the external control device or on a storage unit of the machine. In a preferred example, the machine will prepare the selected beverage in accordance with preconfigured beverage process parameters as stored in the storage unit of the machine for the recognized cartridge variety inserted into the machine.

The personalized beverage parameters that may be input to the computer program may comprise data relating to a desired volume and/or temperature for a particular predefined beverage. The user interface may enable the setting of a desired volume and/or temperature for a specific predefined cartridge variety or for all cartridge varieties.

Optionally, the personalized beverage parameters may further comprise data relating to a desired strength such as "aromatic", "mild" or "intense". The desired strength may be set globally, i.e. for all cartridge varieties, or individually, i.e. for each specific cartridge variety for being used with the machine. Accordingly, a user can assign specific beverage strengths to particular cartridge varieties for being used with the machine.

The personalized beverage parameters may further comprise data relating to a preferred beverage style such as "French style", "Italian espresso", "Seattle style", "Turkish style", "Long black", "filter coffee", "drip-filter", "Third wave", "Moka", etc. These different styles relate to a specific beverage in-cup result, which is to be provided into the receptacle upon beverage preparation with the machine. For example, while "French style" relates to an in-cup coffee beverage result with relatively light colour and low crema, "Italian style" relates to an in-cup coffee beverage result with relatively darker colour and higher amount of crema. The beverage style is preferably set individually for one or more specific cartridge varieties and/or for a limited number of cartridges inserted into the machine. A selected beverage style may as well be set globally for all cartridge varieties inserted into the machine. Accordingly, the selected style is applied for beverage preparation independently of the cartridge variety provided to the machine.

The computer program may be designed to determine a complete set of personalized beverage process parameters for a particular beverage preparation process based on preconfigured beverage process parameters of the selected type and/or the personalized beverage parameters as input to the control interface. The determined set of personalized beverage process parameters may then be transmitted to the beverage preparation machine for immediate use in the current beverage preparation process and/or for being stored in a storage unit of the machine. Such personalized beverage process parameters may preferably be stored in a second look-up table of the storage unit of the machine, while the preconfigured beverage process parameters are stored in a first look-up table of the storage unit.

The determined complete set of personalized beverage process parameters may as well be transmitted to an external electronic storage device. An example of such storage device is an RFID tag, for example an NFC tag, to which the personalized beverage process parameters may be transmitted respectively assigned. In this case, the machine is preferably designed to apply the personalized beverage process parameters for a beverage preparation process upon detection of the presence of the electronic storage device in proximity of the machine. Accordingly, the computer program may be used for setting the personalized beverage process parameters and assigning them to the external electronic storage device for subsequent beverage preparation processes.

In an alternative embodiment, the computer program may as well be designed to transmit only the personalized beverage parameters, i.e. only the process parameters that have been modified from their default value, as input to the control interface to the machine and/or to the external electronic storage device. In this case, the beverage preparation machine is preferably designed to retrieve the personalized beverage parameters from its internal storage unit and/or from the external electronic storage device when preparing a beverage according to a beverage type for which such personalized beverage parameters are stored, whereby the control unit of the machine is designed to determine the complete set of personalized beverage process parameters based on the stored pre-configured process parameters and based on the provided personalized parameters.

The computer program may be designed to selectively connect the external electronic control device to the external electronic storage device either directly or via the beverage preparation machine. In case of the external electronic storage device being an RFID tag, the machine is preferably equipped with dedicated communication means such as an RFID reader and the computer program is designed to communicate with the electronic storage device via the machine.

The computer program is preferably designed to read data from and write data to the external electronic storage device in response to the user inputs to the control interface.

The computer program is preferably designed to connect to and to manage a plurality of different external electronic storage devices to which different personalized beverage process parameters or personalized beverage parameters may be assigned. The process parameters may be assigned in the form of a dedicated cup configuration of a user. Accordingly, the same computer program may be used for managing a plurality of external storage devices that may belong to different users.

The computer program may be configured to automatically obtain a network connection between the electronic control device and the network unit of the machine. Said connection may comprise using a known protocol for data transfer, e.g. TCP or DHP. The computer program may as well be configured for selectively obtaining a network connection between the electronic control device and the network unit of the machine, i.e. upon a dedicated user request such as the pressing of a dedicated "connect" button in the displayed control interface.

The computer program may be configured to automatically or upon user request obtain a network connection between the electronic control device and a remote resource such as an external server or cloud server. Said connection may comprise using a known protocol for data transfer, e.g. TCP or DHP and may be established over a cellular network (e.g. UMTS, LTE, etc.) and/or the internet.

The computer program may be configured to upload and/or download information regarding the machine and/or process parameters for controlling the machine to or from such external server. The remote resource may be a server system (e.g. embodied as hardware and/or software), a peer-to-peer network or other distributed system. The remote resource is preferably arranged at a different location to the electronic control device and the beverage preparation machine.

In a preferred embodiment, the computer program is configured to selectively and/or automatically retrieve beverage preparation recipes from the remote resource. The beverage preparation recipes contain beverage process parameters. The beverage preparation recipes from the remote resource may be stored automatically or upon user selection to a beverage library in a storage unit of the electronic control device or of the machine. The beverage preparation recipes may be created by a service provider and uploaded onto the remote resource for download by a user. The beverage preparation recipes may be adapted/updated periodically. Accordingly, a large variety of different beverage creations or types, which comprise predefined and/or adaptable values for the respective beverage process parameters, may be provided by the remote resource. The beverage recipes may either be offered for download or may be downloaded automatically by the computer program. Accordingly, a user is enabled to access a very large library of different beverage creations or types and may for example selectively download beverage creations or types for his/her specific taste preferences.

It is also possible that new beverage recipes may automatically be distributed by the remote resource to the computer program respectively the electronic control device when connected thereto. This is for example advantageous when new ingredients containing cartridge varieties for use with the machine are released on the market. The new beverage recipes may then be specifically adapted to the flavor providing ingredients in the new cartridge variety. In addition, the user may as well upload beverage recipes that are created with the computer program to the remote resource. These individual creations may then be stored at the remote resource and downloaded by other users. Accordingly, a user may share his/her favorite beverage creations via the computer program and the remote resource.

The computer program described above may be implemented, in various manners, using digital electronic logic, for example, one or more ASICs or FPGAs, one or more units of firmware configured with stored code, one or more computer programs or other software elements such as modules or algorithms, or any combination thereof. One embodiment may comprise a special-purpose computer specially configured to perform the functions described herein and in which all of the functional units comprise digital electronic logic, one or more units of firmware configured with stored code, or one or more computer programs or other software elements stored in storage media.

The electronic control device comprising the computer program as described above can be any electronic device with at least one network unit for communicating with a beverage preparation machine.

For example, the electronic control device may comprise or can be included in at least one selected from a group consisting of a desktop computer, a laptop computer, a server, a media player (such as an MP3 player), a subnotebook/netbook, a tablet computer, a smartphone, a cellular telephone, a set-top box, a personal digital assistant (PDA), a game console, and/or another electronic device. In a preferred embodiment, the electronic control device is a portable small form factor device respectively a handheld device such as a smartphone, a PDA or a tablet computer.

The electronic control device preferably comprises a processing unit, a memory unit, a network unit, a display unit and/or an input/output (I/O) system. The input/output system may be comprised by the display unit such as e.g. in the form of a touchscreen. The electronic control device for being connected to the beverage preparation machine is thus designed for providing a convenient user interface by means of which a personalized beverage may be prepared with the beverage preparation machine.

In a further aspect, the invention relates to a system comprising a beverage preparation machine and an electronic control device as described above. The system preferably further comprises at least one external electronic storage device such as an RFID tag, for example an NFC tag. The beverage preparation machine is preferably designed to communicate with both the external electronic control device and the external electronic storage device. The external electronic storage device is preferably designed for storing and/or providing personalized beverage data or parameters such as data relating to a particular beverage style, texture, volume and/or temperature data to the machine. The external electronic storage device is preferably integrated in a beverage receptacle for receiving a beverage prepared by the machine. The external electronic storage device may as well be integrated in another portable device such as e.g. a key ring or the like.

The system may further comprises a beverage module, in particular for preparing multi-component beverages, with communication means for communicating with the beverage preparation machine and the machine being designed to operate in a third mode for further setting the beverage process parameters based on third data stored in storage unit of the machine and/or in dedicated storage unit of the removable module. The module may be a milk frother and/or a hot water dispenser. The module may be designed for being connectable to the machine and may comprises an outlet for providing a beverage such as hot or cold milk froth or milk-based liquid and/or hot water.

### Brief description of the drawings

Further features, advantages and objects of the present invention will become apparent for a skilled person when reading the following detailed description of embodiments of the present invention, when taken in conjunction with the figures of the enclosed drawings.
- Fig. 1: is a schematic illustration of a preferred embodiment of the system according to the invention.
- Fig. 2: is a block diagram of the components of the beverage preparation machine according to the invention.
- Fig. 3: is a block diagram illustrating a preferred embodiment of the electronic control device of the beverage preparation machine.
- Fig. 4: is a block diagram illustrating preferred different modes of operation of the beverage preparation machine.
- Fig. 5: relates to a screenshot of a preferred embodiment of a home screen of a control interface of the computer program respectively of the electronic control device according to the invention.
- Fig. 6: relates to a series of screenshots of the control interface when preparing a beverage with the beverage preparation machine in a first mode of operation of the machine.
- Fig. 7: relates to a series of screenshots of the control interface when preparing a beverage with the beverage preparation machine upon selection of a predefined beverage type with the computer program.
- Fig. 8: relates to a series of screenshots of the control interface when adapting personalized beverage parameters such as the volume and/or temperature of the prepared beverage.
- Fig. 9: relates to a series of screenshots of the control interface when adapting personalized beverage parameters and assigning them to the external electronic storage device.
- Fig. 10: relates to a series of screenshots of the control interface when preparing a beverage with the beverage preparation machine in a second mode of operation of the machine.

### Detailed description of the figures

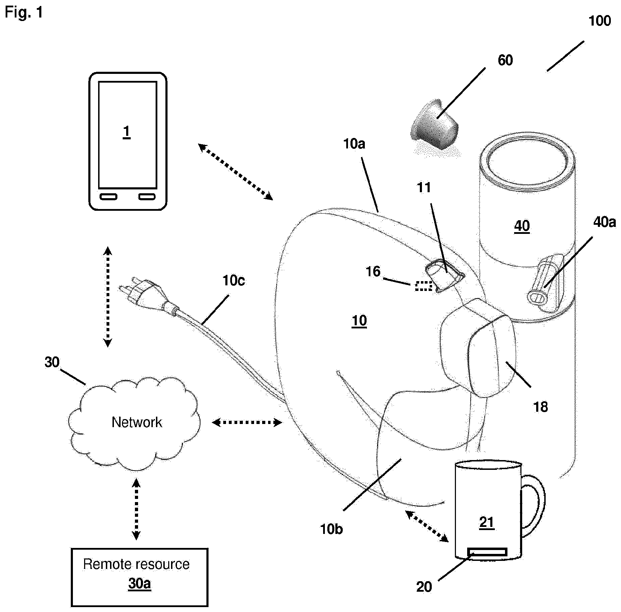

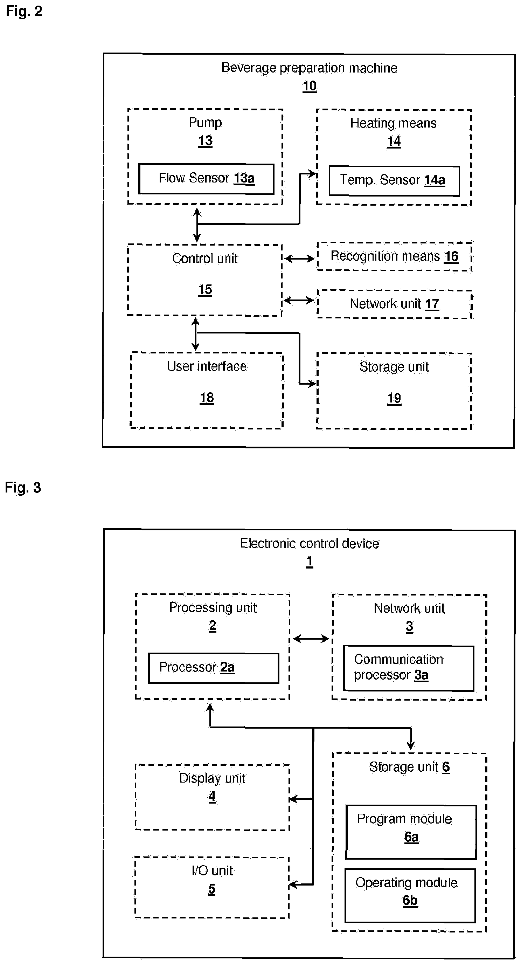

Fig. 1 is a schematic illustration of a preferred embodiment of a system 100 according to the invention. The system 100 preferably comprises a beverage preparation machine 10, an electronic control device 1 and an electronic storage device 20. The beverage preparation machine 10 is preferably designed for communicating with each of the external electronic control device 1 and the external electronic storage device 20. For this purpose, the machine 10 and the electronic control device 1 preferably each comprise a dedicated network unit 3,17 (see fig. 2 and 3). The connection can be for example a connection via Bluetooth and/or WLAN. The electronic storage device 20 and the machine 10 are preferably communicating via radio waves such as by RFID technology. Thereby, the machine 10 preferably comprises an RFID antenna, i.e. an RFID reader (not shown). The external electric storage device 20 is preferably an RFID tag, for example an NFC tag, designed to allow reading and writing data from and to a storage unit thereof. The electronic storage device 20 and the machine 10 may as well be designed to communicate with a different communication standard such as via Bluetooth and/or WLAN. The electronic storage device 20 is preferably connected to a receptacle such as a coffee cup 21. In particular, the coffee cup 21 may comprise the storage device 20 integrally formed in a bottom portion thereof. The storage device 20 may as well be designed as being detachable from the cup 21.

The beverage preparation machine 10 is preferably further designed to communicate with a remote resource 30a via a network 30 (or "Cloud"). The communication between the machine 10 and the remote resource 30a may be via a wireless network such as a cellular network (e.g. UMTS, LTE, etc.) or a WLAN connection by the network unit 17 of the machine 10.

The electronic control device 1 is preferably also designed to communicate with a remote resource 30a via its network unit 3. The electronic control device 1 is preferably further designed to communicate with the electronic storage device 20 at least indirectly, i.e. via the beverage preparation machine 10. The electronic control device 1 may as well be designed to communicate directly with the electronic storage device 20.

The electronic control device 1 is preferably a handheld device such as a smartphone or tablet computer.

The beverage preparation machine 10 is a cartridge-based beverage preparation machine, i.e. a machine that is designed for preparing a beverage upon injection of liquid into a beverage ingredients containing cartridge 60. The machine 10 is preferably designed for preparing in particular a coffee or tea beverage by means of injection of liquid into a cartridge 60 and for draining the resulting beverage therefrom.

The beverage preparation machine 10 comprises a housing 10a to which a preferably removable cartridge tray 10b is connected, and an electric power supply 10c such as a connection to the mains or a rechargeable battery. The machine may further comprise a user interface 18 such as a display or touchscreen unit. The machine further comprises a cartridge receiving means 11 for receiving a cartridge for beverage preparation. The cartridge receiving means 11 is preferably a recess or support provided in the upper portion of the housing 10a of the machine and into which the user may selectively place a single cartridge 60 intended for beverage preparation. The receiving means 11 are preferably designed to provide the cartridge to a beverage brewing chamber of the machine in which liquid is selectively injected into the cartridge. In an alternative embodiment, the cartridge receiving means 11 may as well be presented by a retractable cartridge holder (not shown).

The machine further comprises cartridge recognition means 16 which are preferably arranged in vicinity of the receiving means 11 and which are designed for interacting with the cartridge 60 in order to read cartridge specific information or data therefrom. The recognition means 16 may be a code reader, for example a barcode scanner, a camera, an inductive and/or resistive sensor and/or a colour sensor, designed to obtain information stored in a code, for example a barcode, provided on the cartridge and/or to detect a shape of at least part of the cartridge, a material of the cartridge and/or a colour of at least an exterior portion of the cartridge. The cartridge recognition means 16 is designed to provide the obtained cartridge data to a control unit 15 of the machine.

The system 100 may further comprise an optional beverage module such as a milk module or milk frother 40 and/or a hot water dispenser. The module 40 is preferably designed for being connectable to the machine 10 and comprises an outlet 40a for providing a beverage component such as in particular a milk-based beverage component and/or hot water. The outlet 40a is preferably designed for enabling a delivery of a beverage component to the receptacle 21 when being placed under a dedicated outlet of the beverage preparation machine 10.

The beverage module 40 preferably comprises communication means for communicating with the machine 10 and in particular with the control unit 15 thereof. The communication means may comprise a network unit as previously described with reference to the machine 10. The beverage module 40 may further comprise connection means for enabling an electric connection to the machine 10. The module 40 may as well comprise its own power supply means.

As shown in fig. 2, the beverage preparation machine 10 comprises a control unit 15 which is preferably designed for controlling the machine 10. The control unit 15 is preferably further designed to retrieve operational parameters, e.g. from the electronic control device 1 and/or the electronic storage device 20, processing the obtained parameters and effecting a corresponding control of the machine 10.

The machine 10 further comprises a pump 13 and heating means 14. The machine 10 preferably further comprises a liquid reservoir such as a water tank connected to the pump 13 and the heating means 14. The machine 10 preferably further comprises injection means designed to perforate an inlet face of the cartridge 60. The machine 10 is thus preferably designed for injecting a pressurized and/or heated liquid such as water into the cartridge 60.

The pump 13 is connected to the control unit 15 in order to enable a control of the pressure and the volume of liquid injected into the cartridge 60 during a beverage preparation process. The heating means 14 is also connected to the control unit 15 in order to enable a control of the temperature of the liquid injected in the cartridge during a beverage preparation process. The control unit 15 is designed to control the beverage preparation process according to dedicated beverage process parameters, which preferably comprise at least a liquid pressure profile and a liquid temperature profile over time for liquid injected to the cartridge 60. The control unit 15 is thus designed to set particular target values for the pressure, the temperature and/or the total amount of liquid provided to the cartridge 60. The control unit 15 is preferably also connected to sensor means such as a flow sensor 13a and/or a temperature sensor 14a of the machine 10, which provide a feedback signal relating at least to the flow rate of liquid provided to the cartridge 60 and/or the temperature of the heating means 14. The control unit 15 may thus adapt the control of the heating means 14 and/or the pump 13 in response to the feedback signals of the sensor means 13a,14a.

The machine 10 further comprises a storage unit 19 for storing data thereon and which is also connected to the control unit 15. The storage unit 19 is configured for storing operational parameters of the machine 10 and beverage process parameters for a particular beverage type and/or for a respective cartridge variety. The storage unit 19 may be configured for storing preconfigured or default values for the beverage process parameters that may be selectively adapted by a user of the machine 10, e.g. by means of the electronic control device 1 or the electronic storage device 20.

As shown in Fig. 3, the electronic control device 1 preferably comprises a processing unit 2 having a processor 2a and which is designed for carrying out coded instructions such as a computer program according to the invention. The device 1 further comprises a network unit 3 that preferably comprises a communication processor 3a. The network unit 3 is preferably designed for connecting at least to the beverage preparation machine 10.

The control device 1 further comprises a storage unit 6. The storage unit 6 may comprise a program module 6a and an operating module 6b. The program module 6a and/or the operating module 6b may be designed for storing data and/or instructions for the processing unit 2 and the network unit 3. The storage unit 6 may comprise a dynamic random access memory (DRAM), static random access memory (SRAM) and/or other types of memory. The instructions comprise one or more computer programs that are executable by the processing unit 2 as a control interface program. The computer program may be composed of one or more program modules 6a. The program modules can be implemented in any suitable manner e.g. as a high-level procedural language, an object orientated language, an assembly or machine language. Moreover, said language may be complied or interpreted to be executed by the processing unit 2.

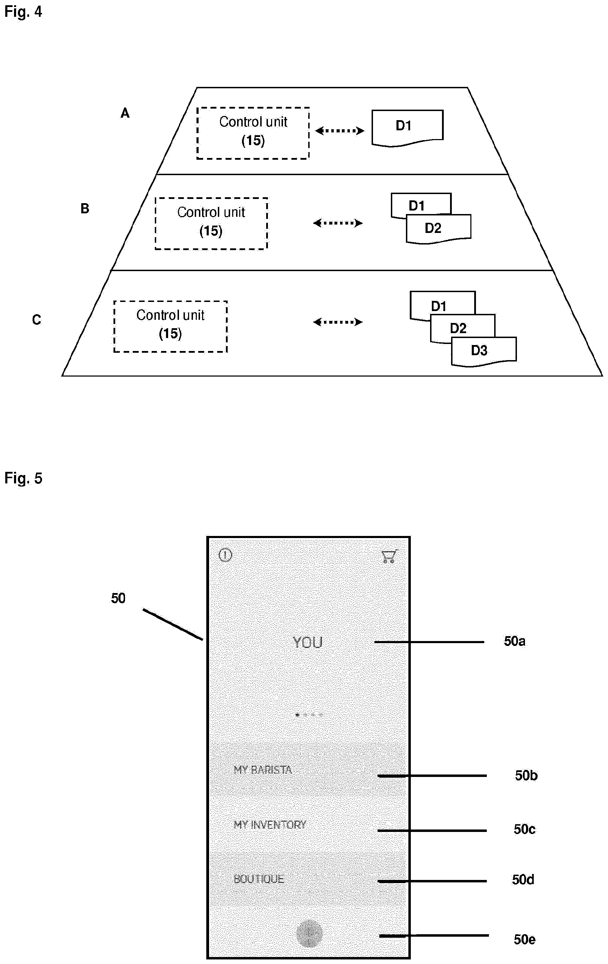

The control device 1 preferably comprises a display unit 4 and/or an input/output unit 5. The display unit 4 and the input/output unit may be formed by the same entity such as for example a touch screen. The input/output unit 5 is preferably designed to enable the displaying of a user control interface 50 (see Fig. 5) for operating the beverage preparation machine 10. Further, the input/output unit 5 is preferably adapted to enable a user input. For this purpose, the input unit may comprise buttons, touch sensing or screen edge buttons associated with the display or buttons associated with LEDs. Any user commands are transferred from the input unit 5 to the processing unit 2 as a signal. The device 1 is thus designed for enabling a user to select a specific beverage to be prepared by the machine 10 and to initiate a beverage preparation process. An example for such user control interface 50 is further discussed with reference to Fig. 5-10 below.

As schematically illustrated in Fig. 4, the beverage preparation machine 10 is designed to operate at least in two different modes of operation A, B when preparing a beverage from a cartridge 60 provided to the machine 10.

In a first mode of operation A, the machine 10 is preferably designed to retrieve a predefined beverage process parameter set from the storage unit 19 of the machine based on cartridge data provided by the cartridge recognition means 16. In this mode, the recognition means 16 preferably provide information to the control unit 15 about a particular recognised cartridge variety out of a plurality of different predefined cartridge varieties that preferably differ in their beverage ingredients content. Based on the provided cartridge data, the control unit 15 will retrieve a set of predefined beverage process parameters for the recognised cartridge variety from the storage unit 19. For this purpose, the storage unit 15 preferably comprises data D1 which is preferably a first look-up table comprising multiple beverage process parameter sets linked to respective cartridge data which preferably identify a particular cartridge variety. Accordingly, the machine 10 may prepare a beverage from the inserted cartridge 60 according to optimized beverage process parameters that are predefined for the respective cartridge variety. The data provided in the first look-up table D1 such as in particular the predefined beverage process parameters linked to the respective cartridge data are preferably preconfigured by the manufacturer of the machine. In a preferred embodiment, the control unit 15 may be designed to automatically update the data in table D1, e.g. upon release of new cartridge varieties on the market or upon adaption of beverage ingredients of a particular cartridge variety. This may be done e.g. by connecting the control unit 15 to the remote resource 30a.

In a second mode of operation B, the machine 10 is preferably designed to retrieve a predefined beverage process parameter set from the storage unit 19 of the machine 10 based on the cartridge data provided by the cartridge recognition means 16 and to adapt or replace said parameter set based on the data provided by the at least one external electronic device 1,20. The machine 10 preferably enters said mode of operation in case of the external electronic control device 1 and/or the external electronic storage device 20 being connected to the machine 10.

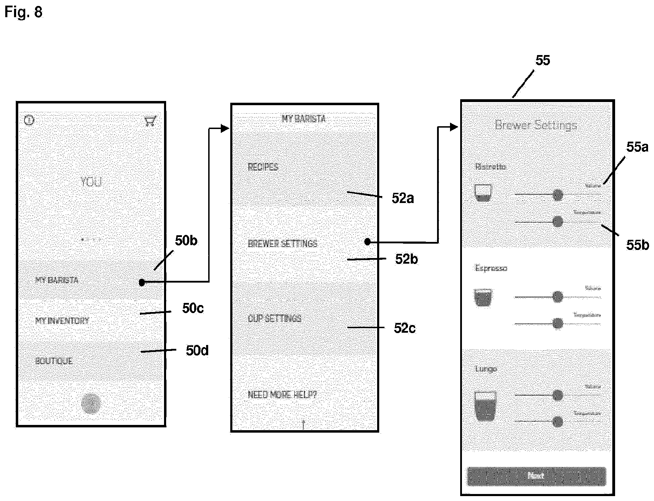

In this mode, the control unit 15 is designed to obtain a predefined parameter set from the first look-up table D1, as described above with respect to the first mode of operation. Accordingly, the control unit 15 uses the cartridge data provided by the cartridge recognition means 16 and retrieves a predefined beverage process parameter set from the first look-up table D1. In addition, the control unit 15 retrieves data D2 from the external electronic control device 1 and/or the external electronic storage device 20. The data D2 may be in the form of a second look-up table in which a complete set of personalized beverage process parameters and/or at least one personalized beverage parameter may be stored. In the second look-up table D2, the respective parameters may also be linked to predefined cartridge data, which preferably relates to a recognised cartridge variety out of a plurality of predefined cartridge varieties. The data D2 may as well contain merely a reference value or an identifier referring to an additional look-up table in the storage unit 19 of the machine 10. When preparing a beverage in the second mode B, the machine 10 is thus preferably designed to consider the additional personalized data provided by the electronic control device 1 and/or the electronic storage device 20 in order to determine a complete set of personalized beverage process parameters for obtaining a desired beverage result, which is in accordance with specific user preferences. The additional personalized data is preferably related to a beverage style, e.g., filtered coffee, Italian espresso, etc.) which modifies or replaces, e.g. via a second set of process parameters of a look-up table D2, at least partially, the set of process parameters of the look-up table D1 related to an identified capsule. Examples for such user preferences are preferably definable by the electronic control device 1 as will be described later with respect to figures 8-10.

The machine 10 is preferably designed to operate at least in a third mode C dependent on the connection of the removable beverage module 40 to the machine 10. In this third mode, the control unit 15 is preferably designed to base the beverage preparation process on data D1 and D2 as described above with respect to the first and second mode and preferably also on a third data D3. The third data D3 may be a third look-up table stored in the storage unit 19 of the machine 10 or in a dedicated storage unit of the removable module. In this third mode, the beverage preparation machine is preferably designed for preparing a variety of multi-component beverages such as in particular coffee- and milk-based beverages and/or coffee- and hot water-based beverages.

Optionally, the machine 10 is designed to operate in a regular mode, which is not illustrated in the figures, in case for example that no cartridge data is available. In this regular mode, the control unit is preferably designed to base the beverage preparation process on default parameters stored for example as a default parameter set in the storage unit of the machine.

Fig. 5 relates to a screenshot of a preferred embodiment of a home screen of a control interface 50 of the computer program respectively of the electronic control device 1 according to the invention. The home screen may comprise an area for general information 50a, and a variety of menu items 50b,50c,50d for selection by the user. The home screen may additionally comprise a user setting item 50e for setting user specific configurations of the computer program.

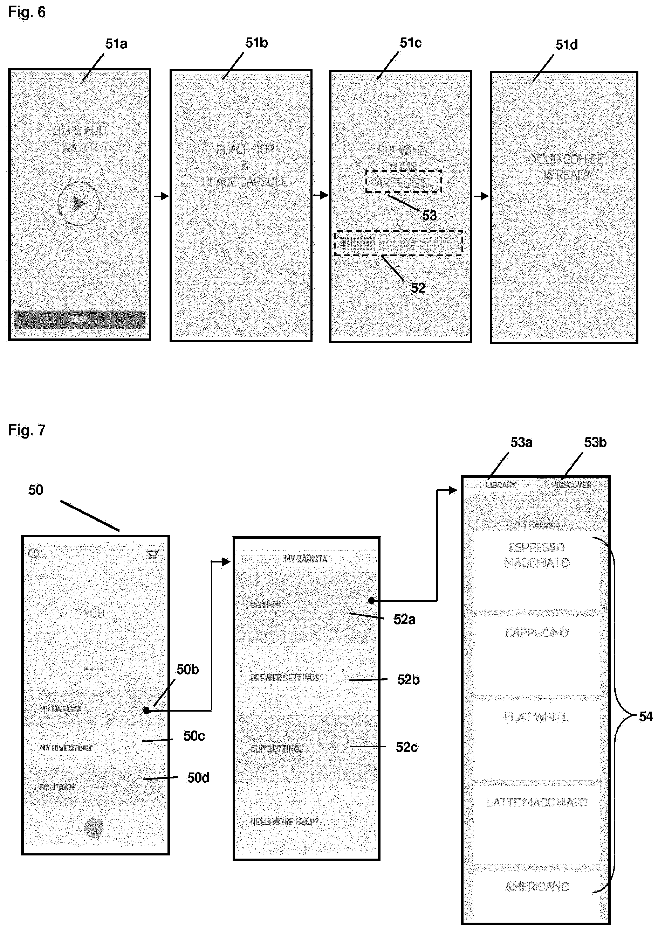

Fig. 6 relates to a series of screenshots of the control interface 50 when preparing a beverage with the beverage preparation machine 10 in a first mode of operation A of the machine. As shown in screenshot 51a, the user may be notified about actual machine requirements such as the required filling of a liquid supply tank of the machine, before enabling the beverage preparation. A status screen 51b may then notify the user about the possibility to prepare a beverage upon insertion of a cartridge 60 into the cartridge receiving means 11. Upon doing so, the cartridge recognition means 16 will provide cartridge data to the control means 15 which will retrieve a predefined beverage process parameter set from the storage unit 19 of the machine. The machine 10 will then prepare the beverage according to these beverage process parameters and display the beverage preparation progress in a dedicated item 52 of the screen. In screenshot 51c, the screen may be designed to notify the user about the cartridge variety out of a plurality of predefined cartridge varieties by a dedicated item 53. When the beverage preparation process is finished, the control interface 50 may display a dedicated status notification as shown in screenshot 51d.

Fig. 7 relates to a series of screenshots of the control interface 50 when preparing a beverage with the beverage preparation machine 10 upon selection of a predefined beverage recipe 54 with the computer program. As shown the user may open a submenu "My barista" when pressing a dedicated menu item 50b of the homes screen. The submenu preferably comprises a variety of items 52a,52b,52c of which at least one item enables the selection of predefined recipes 54 in a further submenu. Therein, the user may choose between recipes 54 stored on the electronic control device 1 and/or the machine 10, which may be stored in a local beverage recipe library 53a. In addition, the control device 1 may enable the user to discover new recipes respectively to browse through a remote library 53b which is preferably stored on a remote resource 30a. Upon selection of a recipe 54 by means of the electronic control device 1, the device 1 will retrieve the beverage process parameters for the selected recipe and transmit them to the machine 10 which will prepare the selected beverage with the transmitted beverage process parameters. In case the recipe 54 and the selected process parameters are stored on a storage unit 19 of the machine 10, no transmission of process parameters needs to take place and the control device 1 merely activates the beverage preparation process according to the process parameters stored on the storage unit 19.

The recipe library 53a,53b may be designed for being adaptable with respect to the available beverage recipes. For example, the electronic control device 1 may retrieve information about the inserted cartridge 60 from the machine and will then display only recipes that are available for beverage preparation based on the ingredients of the particular cartridge variety. Further, the electronic control device 1 may retrieve information about the connection of the removable beverage module 40 to the machine 1 from the machine and may then adapt the available recipes dependent on the connected beverage module 40. For example, in case the removable module 40 enables the preparation of milk components, the electronic control device 1 may display dedicated milk-based recipes only in case the removable module 40 is connected.

Fig. 8 relates to a series of screenshots of the control interface 50 when adapting personalized beverage parameters such as the volume and/or temperature of a beverage. As shown, the control interface 50 preferably comprises a dedicated submenu "brewer settings" 52b which upon selection displays a control screen 55 for adapting at least the volume and/or the temperature for the respective beverage types such as "Ristretto", "Espresso", "Lungo". Thereby, the beverage types as shown in control interface 55 are preferably linked to a particular predefined cartridge variety or a predefined number of cartridge varieties. For example, the predefined cartridge varieties may be divided into cartridges for preparing a ristretto beverage, an espresso beverage and/or a lungo beverage. The respective mapping of the different coffee beverage types to the respective cartridge varieties insertable into the machine may be carried out by the cartridge recognition means 16 and may be part of the provided cartridge data. The mapping may as well be carried out by a dedicated reference table stored on the storage unit 19 and based on the cartridge data provided by the recognition means 16.

For adjusting the respective personalized parameters such as the volume and/or the temperature for the respective beverage type, the control interface 50 preferably comprises adjustment means such as slidable control elements 55a,55b. These control elements lead to a setting of a dedicated personalized beverage parameter concerning the respective volume and/or temperature value. The respective personalized beverage parameters may be transferred to the machine 1 in order for being stored by the storage unit 19 thereof or may be locally stored by the storage unit 6 of the control device 1.

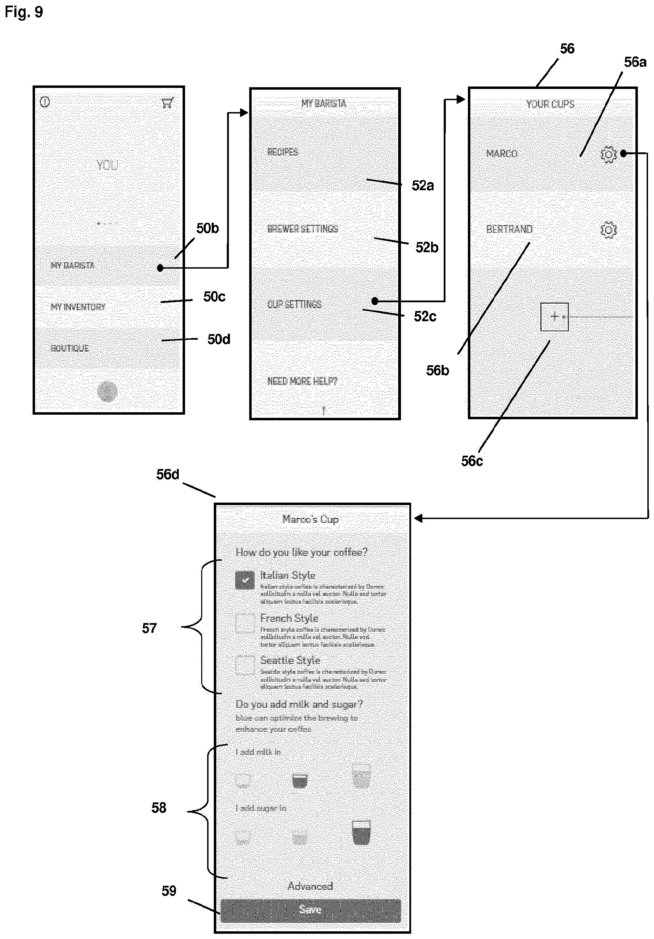

Fig. 9 relates to a series of screenshots of the control interface 50 when adapting personalized beverage parameters for being assigned to the external electronic storage device 20. As shown, the control interface 50 preferably provides a dedicated submenu "cup settings" 52c which upon selection displays a selection screen 56 in which available cup configurations 56a,56b are displayed. The cup configurations 56a,56b relate to personalized configurations stored on respective external electronic control devices 20 of the system 100. The control device 1 may retrieve from the machine 10 information about connected storage devices 20 and may be designed for displaying only connected storage devices 20 in the selection screen 56. The control device 1 may as well be configured to display all generated cup configurations 56a,56b independent on whether the respective storage devices 20 are connected to the machine 10 or to the electronic control device 1. The selection screen 56 may further comprise a selector item 56c for creating a new cup configuration.

Upon selection of the respective cup configuration a control screen 56d is displayed in which a user can set additional personalized beverage parameters for enabling the preparation of a personalized beverage with the machine. In particular, the control screen 56d enables a selection of a respective beverage style 57 out of a list of possible styles, such as e.g. "French style", "Italian style", "Seattle style", "Turkish style", "Long black", etc. These different styles relate to a specific beverage in-cup result, which is to be provided into the receptacle upon beverage preparation with the machine 10. The selected beverage style is preferably set globally for all cartridge varieties inserted into the machine 10. Accordingly, the desired style is preferably applied for beverage preparation independent of the cartridge variety provided to the machine 10. The beverage style may as well be set individually for specific cartridge varieties inserted into the machine.

The control screen 56d may enable the selection of further parameters for personalizing the in-cup beverage result. For example, the control screen 56d may enable the selection of whether the user will add milk or sugar to the prepared beverage in a dedicated selector item 58 of the control screen 56d. These personalized parameters may then be considered for the beverage preparation process with the machine 10 when being based on the respective cup configuration.

The control screen 56d preferably comprises a dedicated button 59 for saving the personalized cup configuration. Thereby, the cup configuration will create a personalized beverage parameter set which is saved to the electronic device 1. The personalized beverage parameter set preferably contains at least the selected personalized beverage parameters in a dedicated look-up table. The respective personalized beverage parameters may then be used by the machine 10 when preparing a beverage according to beverage process parameters, which take into account the provided personalized beverage parameter set. The cup configuration 56d is preferably directly transmitted to the respective external electronic storage device 20 such as an RFID tag integrated into a cup 21. In case the RFID tag 20 is not connected to the electronic control device 1 and/or the machine 10, the personalized beverage parameter set is preferably automatically transmitted and/or updated to the respective RFID tag 20 when being connected to the machine 10 or the electronic control device 1.

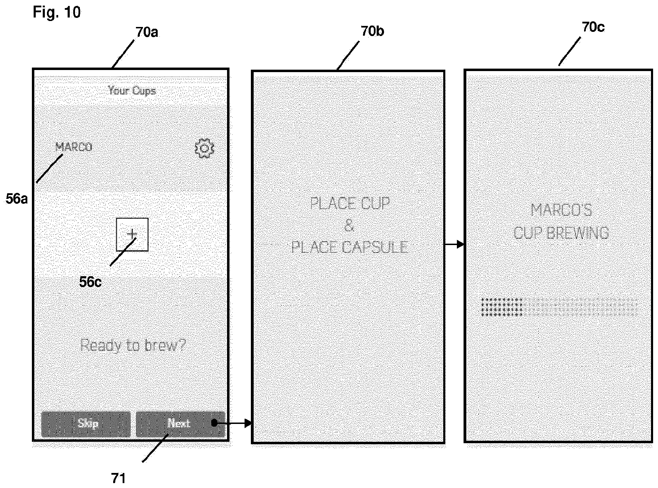

Fig. 10 relates to a series of screenshots of the control interface 50 when preparing a beverage with the beverage preparation machine in a second mode of operation of the machine in case the machine 10 is connected to an electronic storage device 20 such as the RFID tag integrated in the cup 21. In this case, the control interface 50 is preferably designed to display a selection screen 70a which depicts the storage device 20 connected to the machine 10 and to which a respective personalized cup configuration is assigned. Upon pressing a dedicated button 71, the control interface 50 displays a message in information screen 70b which invites the user to place the respective cup 21 below a beverage outlet of the machine 10 and to insert a cartridge 60 into the cartridge receiving means 11 of the machine 10. When a cartridge 60 is inserted into the machine 10, the beverage preparation process will automatically start. Thereby, the control unit 15 of the machine 10 preferably retrieves cartridge data from the cartridge recognition means 16 and will retrieve corresponding predefined beverage process parameters from a first look-up table D1 in the storage unit 19 of the machine 10. Additionally, the control unit 15 will retrieve data D2 containing personalized beverage parameters from the external storage unit 20 integrated into the cup 21. The control unit 15 will then adapt the predefined beverage process parameters based on the personalized beverage parameters in order to determine optimized and/or personalized beverage process parameters for the beverage preparation process with the respective cartridge 60 provided to the machine 10. Thereby, the control unit 15 may in particular be designed to adjust the predefined pressure, temperature and/or liquid volume values of the predefined pressure, temperature and/or liquid volume profile of the predefined process parameters for the respective cartridge variety in order to obtain a desired personalized beverage in accordance with the user preferences.

## Claims

1. A beverage preparation machine (10) for preparing a variety of beverages according to optimized and/or personalized beverage process parameters, the machine comprising:
a brewing chamber for receiving a beverage-ingredients containing cartridge (60) and recognition means (16) designed to interact with the cartridge (60),
a control unit (15) operable to execute a beverage preparation process according to beverage process parameters in order to prepare a beverage by injection of liquid into the cartridge (60),
a network unit (17) connected to the control unit (15) and designed for communicating with at least one external electronic device (1,20),
**characterized in that** the control unit (15) is designed to selectively operate at least in two different modes (A,B) for setting the beverage process parameters based on cartridge data provided by the cartridge recognition means (16) and/or based on data provided by the at least one electronic device (1,20) networked to the machine (10),
wherein in a first mode (A), the control unit (15) is designed to set the beverage process parameters based on the cartridge data only,
wherein in a second mode (B), the control unit (15) is designed to set the beverage process parameters based on cartridge data and on data received by the at least one electronic device (1,20), and
wherein the control unit (15) is further designed to automatically operate in the second mode by recognition of the at least one external electronic device (1,20).

2. The beverage preparation machine according to claim 1,
wherein in the first mode (A) the control unit (15) is designed to retrieve a predefined beverage process parameter set from a storage unit (19) of the machine (10) in response to cartridge data only.

3. The beverage preparation machine according to claim 2,
wherein the storage unit (19) is designed to store a first look-up table (D1) with multiple beverage process parameter sets for beverage preparation linked to respective predefined cartridge data.

4. The beverage preparation machine according to any of the preceding claims,
wherein the cartridge data relates to a cartridge variety identifier such as a recognized colour, a recognized material, a read content of an RFID tag, a recognized geometrical shape of the cartridge.

5. The beverage preparation machine according to any of the preceding claims,
wherein in the second mode (B) the control unit (15) is designed to retrieve a predefined beverage process parameter set from a storage unit (19) of the machine (10) based on cartridge data and to adapt or replace said parameter set based on the data provided by the at least one external electronic device (1,20).

6. The beverage preparation machine according to claim 5,
wherein the data provided by the at least one external electronic device (1,20) comprises a complete set of personalized beverage process parameters for beverage preparation, at least one personalized beverage parameter, or reference data for referring to an additional look-up table with multiple parameter sets for beverage preparation stored in the storage unit (19) of the machine (10).

7. The beverage preparation machine according to any of the preceding claims,
wherein in the second mode (B) the control unit (15) is designed for communicating with an external electronic storage device (20) and an external electronic control device (1) and for reconfiguring or replacing data stored on the external electronic storage device (20) based on a user input at the machine (10) and/or based on data provided by the external electronic control device (1).

8. The beverage preparation machine according to claim 7,
wherein the external electronic storage device (20) is an RFID tag, in particular an NFC tag, preferably integrated or attached to a beverage receptacle (21) and the external electronic control device (1) is a handheld device such as a smartphone.

9. The beverage preparation machine according to any of the preceding claims,
wherein the control unit (15) is designed to operate at least in a third mode (C) dependent on the connection of a removable module (40) such as a milk module or milk frother to the beverage preparation machine (10).

10. The beverage preparation machine according to any of the preceding claims,
wherein the network unit (17) comprises a wireless interface such as a Wireless local area network (WLAN), a Bluetooth, WiFi, or a near-field-communication network interface and/or an RFID reader.

11. The beverage preparation machine according to any of the preceding claims,
wherein the beverage preparation machine (10) is designed to automatically or upon user request obtain via the network unit (17) a network connection to a remote resource (30a) such as a cloud server for data transfer.

12. The beverage preparation machine according to claim 11,
wherein the beverage preparation machine (10) is configured to selectively and/or automatically retrieve beverage preparation recipes (54) comprising beverage process parameters from the remote resource (30a).

13. A system (100) comprising a beverage preparation machine (10) according to any of claims 1 to 12 and an electronic control device (1) comprising a computer program executable on said electronic control device (1), said program being configured to:
obtain via a network unit (3) of the electronic control device (1) a network connection to said beverage preparation machine (10),
display a control interface (50) for receiving a plurality of inputs from a user in order to determine optimized and/or personalized beverage process parameters for a beverage preparation process with the beverage preparation machine (10),
wherein the user inputs comprise the selection of a predefined beverage recipe (54) out of a plurality of beverage recipes, and
wherein the user inputs further comprise the setting of personalized beverage parameters for customizing said predefined beverage recipe (54) for being transmitted to the beverage preparation machine (10) and/or to an external electronic storage device (20) networked to the machine.

14. The system of claim 13 further comprising an external electronic storage device (20) such as an RFID tag, said RFID tag being for example integrated in or attached to a beverage receptacle (21) for receiving a beverage prepared by the machine (10).

## Patentansprüche

1. Getränkezubereitungsmaschine (10) zur Zubereitung einer Vielzahl von Getränken entsprechend optimierten und/oder personalisierten Getränkeprozessparametern, wobei die Maschine umfasst:
eine Brühkammer zum Aufnehmen einer Getränkezutaten enthaltenden Kapsel (60) und ein Erkennungsmittel (16), das dafür ausgelegt ist, mit der Kapsel (60) in Wechselwirkung zu treten,
eine Steuereinheit (15), die betreibbar ist, um einen Getränkezubereitungsprozess gemäß Getränkeprozessparametern auszuführen, um ein Getränk durch Einspritzen von Flüssigkeit in die Kapsel (60) zuzubereiten,
eine Netzwerkeinheit (17), die mit der Steuereinheit (15) verbunden ist und dafür ausgelegt ist, mit mindestens einer externen elektronischen Vorrichtung (1, 20) zu kommunizieren,
**dadurch gekennzeichnet, dass** die Steuereinheit (15) dafür ausgelegt ist, basierend auf von dem Kapselerkennungsmittel (16) bereitgestellten Kapseldaten und/oder basierend auf Daten, die von der mindestens einen elektronischen Vorrichtung (1, 20) bereitgestellt werden, welche über ein Netzwerk mit der Maschine (10) verbunden ist, selektiv zumindest in zwei verschiedenen Betriebsarten (A, B) zum Einstellen der Getränkeprozessparameter zu arbeiten,
wobei die Steuereinheit (15) in einer ersten Betriebsart (A) dafür ausgelegt ist, die Getränkeprozessparameter nur basierend auf den Kapseldaten einzustellen,
wobei die Steuereinheit (15) in einer zweiten Betriebsart (B) dafür ausgelegt ist, die Getränkeprozessparameter basierend auf Kapseldaten und auf von der mindestens einen elektronischen Vorrichtung (1, 20) empfangenen Daten einzustellen, und
wobei die Steuereinheit (15) ferner dazu ausgelegt ist, durch Erkennen der mindestens einen externen elektronischen Vorrichtung (1, 20) automatisch in dem zweiten Modus zu arbeiten.

2. Getränkezubereitungsmaschine nach Anspruch 1,
wobei die Steuereinheit (15) in der ersten Betriebsart (A) dafür ausgelegt ist, einen vordefinierten Getränkeprozessparametersatz aus einer Speichereinheit (19) der Maschine (10) nur als Reaktion auf Kapseldaten abzurufen.

3. Getränkezubereitungsmaschine nach Anspruch 2,
wobei die Speichereinheit (19) dafür ausgelegt ist, eine erste Nachschlagetabelle (D1) mit mehreren Getränkeprozessparametersätzen zur Getränkezubereitung, die mit jeweiligen vordefinierten Kapseldaten verknüpft sind, zu speichern.

4. Getränkezubereitungsmaschine nach einem der vorstehenden Ansprüche,
wobei sich die Kapseldaten auf eine Kapselartkennung beziehen, wie beispielsweise eine erkannte Farbe, ein erkanntes Material, einen gelesenen Inhalt eines RFID-Etiketts, eine erkannte geometrische Form der Kapsel.

5. Getränkezubereitungsmaschine nach einem der vorstehenden Ansprüche,
wobei die Steuereinheit (15) in der zweiten Betriebsart (B) dafür ausgelegt ist, einen vordefinierten Getränkeprozessparametersatz aus einer Speichereinheit (19) der Maschine (10) basierend auf Kapseldaten abzurufen und diesen Parametersatz basierend auf den von der mindestens einen externen elektronischen Vorrichtung (1, 20) bereitgestellten Daten anzupassen oder zu ersetzen.

6. Getränkezubereitungsmaschine nach Anspruch 5,
wobei die durch die mindestens eine externe elektronische Vorrichtung (1, 20) bereitgestellten Daten einen kompletten Satz von personalisierten Getränkeprozessparametern für die Getränkezubereitung, mindestens einen personalisierten Getränkeparameter oder Referenzdaten für die Bezugnahme auf eine zusätzliche Nachschlagetabelle mit mehreren Parametersätzen für die Getränkezubereitung, die in der Speichereinheit (19) der Maschine (10) gespeichert ist, umfassen.

7. Getränkezubereitungsmaschine nach einem der vorstehenden Ansprüche,
wobei die Steuereinheit (15) in der zweiten Betriebsart (B) dafür ausgelegt ist, mit einer externen elektronischen Speichervorrichtung (20) und einer externen elektronischen Steuervorrichtung (1) zu kommunizieren und auf der externen elektronischen Speichervorrichtung (20) gespeicherte Daten basierend auf einer Benutzereingabe an der Maschine (10) und/oder basierend auf von der externen elektronischen Steuervorrichtung (1) bereitgestellten Daten umzukonfigurieren oder zu ersetzen.

8. Getränkezubereitungsmaschine nach Anspruch 7,
wobei die externe elektronische Speichervorrichtung (20) ein RFID-Etikett, insbesondere ein NFC-Etikett, ist, das vorzugsweise in einen Getränkebehälter (21) integriert oder daran befestigt ist, und wobei die externe elektronische Steuervorrichtung (1) ein Handgerät wie zum Beispiel ein Smartphone ist.

9. Getränkezubereitungsmaschine nach einem der vorstehenden Ansprüche,
wobei die Steuereinheit (15) dafür ausgelegt ist, abhängig von der Verbindung eines herausnehmbaren Moduls (40) wie eines Milchmoduls oder Milchschäumers mit der Getränkezubereitungsmaschine (10) in mindestens einer dritten Betriebsart (C) zu arbeiten.

10. Getränkezubereitungsmaschine nach einem der vorstehenden Ansprüche,
wobei die Netzwerkeinheit (17) eine drahtlose Schnittstelle wie zum Beispiel ein drahtloses lokales Netzwerk (WLAN), eine Bluetooth-, WiFi- oder eine Nahfeldkommunikations-Netzwerkschnittstelle und/oder ein RFID-Lesegerät umfasst.

11. Getränkezubereitungsmaschine nach einem der vorstehenden Ansprüche,
wobei die Getränkezubereitungsmaschine (10) dafür ausgelegt ist, automatisch oder auf Benutzeranforderung über die Netzwerkeinheit (17) eine Netzwerkverbindung zu einer entfernten Ressource (30a) wie einem Cloud-Server zur Datenübertragung zu erhalten.

12. Getränkezubereitungsmaschine nach Anspruch 11,
wobei die Getränkezubereitungsmaschine (10) so konfiguriert ist, dass sie selektiv und/oder automatisch Getränkezubereitungsrezepte (54), umfassend Getränkeprozessparameter, von der entfernten Ressource (30a) abruft.

13. System (100), umfassend eine Getränkezubereitungsmaschine (10) nach einem der Ansprüche 1 bis 12 und eine elektronische Steuervorrichtung (1), die ein auf der elektronischen Steuervorrichtung (1) ausführbares Computerprogramm umfasst, wobei das Programm konfiguriert ist zum:
Erhalten einer Netzwerkverbindung zu der Getränkezubereitungsmaschine (10) über eine Netzwerkeinheit (3) der elektronischen Steuervorrichtung (1),
Anzeigen einer Steuerschnittstelle (50) zum Empfangen einer Vielzahl von Eingaben eines Benutzers, um optimierte und/oder personalisierte Getränkeprozessparameter für einen Getränkezubereitungsprozess mit der Getränkezubereitungsmaschine (10) zu ermitteln,
wobei die Benutzereingaben die Auswahl eines vordefinierten Getränkerezepts (54) aus einer Vielzahl von Getränkerezepten umfassen, und
wobei die Benutzereingaben ferner die Einstellung personalisierter Getränkeparameter zur Anpassung des vordefinierten Getränkerezepts (54) zur Übertragung an die Getränkezubereitungsmaschine (10) und/oder an eine externe elektronische Speichervorrichtung (20) umfassen, die über ein Netzwerk mit der Maschine verbunden ist.

14. System nach Anspruch 13, ferner umfassend eine externe elektronische Speichervorrichtung (20) wie ein RFID-Etikett, wobei das RFID-Etikett beispielsweise in einen Getränkebehälter (21) zur Aufnahme eines von der Maschine (10) hergestellten Getränks integriert oder daran befestigt ist.

## Revendications

1. Machine de préparation de boisson (10) pour la préparation d'une variété de boissons selon des paramètres de processus de boisson optimisés et/ou personnalisés, la machine comprenant :
une chambre d'infusion pour recevoir une cartouche contenant des ingrédients de boisson (60) et un moyen de reconnaissance (16) conçu pour interagir avec la cartouche (60),
une unité de commande (15) exploitable pour exécuter un processus de préparation de boisson selon des paramètres de processus de boisson afin de préparer une boisson par injection de liquide dans la cartouche (60),
une unité de réseau (17) connectée à l'unité de commande (15) et conçue pour communiquer avec au moins un dispositif électronique externe (1, 20),
**caractérisée en ce que** l'unité de commande (15) est conçue pour fonctionner sélectivement au moins dans deux modes différents (A, B) pour régler les paramètres de processus de boisson sur la base de données de cartouche fournies par le moyen de reconnaissance de cartouche (16) et/ou sur la base de données fournies par l'au moins un dispositif électronique (1, 20) mis en réseau avec la machine (10),
dans laquelle, dans un premier mode (A), l'unité de commande (15) est conçue pour régler les paramètres de processus de boisson sur la base des données de cartouche uniquement,
dans laquelle, dans un deuxième mode (B), l'unité de commande (15) est conçue pour régler les paramètres de processus de boisson sur la base de données de cartouche et de données reçues par l'au moins un dispositif électronique (1, 20), et
dans laquelle l'unité de commande (15) est en outre conçue pour fonctionner automatiquement dans le deuxième mode par reconnaissance de l'au moins un dispositif électronique externe (1, 20).

2. Machine de préparation de boisson selon la revendication 1,
dans laquelle, dans le premier mode (A), l'unité de commande (15) est conçue pour récupérer un ensemble prédéfini de paramètres de processus de boisson à partir d'une unité de stockage (19) de la machine (10) en réponse à des données de cartouche uniquement.

3. Machine de préparation de boisson selon la revendication 2,
dans laquelle l'unité de stockage (19) est conçue pour stocker une première table de consultation (D1) avec de multiples ensembles de paramètres de processus de boisson pour la préparation de boisson, liés à des données de cartouche prédéfinies respectives.

4. Machine de préparation de boisson selon l'une quelconque des revendications précédentes,
dans laquelle les données de cartouche concernent un identifiant de variété de cartouches tel qu'une couleur reconnue, un matériau reconnu, un contenu lu d'une étiquette RFID, une forme géométrique reconnue de la cartouche.

5. Machine de préparation de boisson selon l'une quelconque des revendications précédentes,
dans laquelle, dans le deuxième mode (B), l'unité de commande (15) est conçue pour récupérer un ensemble prédéfini de paramètres de processus de boisson à partir d'une unité de stockage (19) de la machine (10) sur la base de données de cartouche et pour adapter ou remplacer ledit ensemble de paramètres sur la base des données fournies par l'au moins un dispositif électronique externe (1, 20).

6. Machine de préparation de boisson selon la revendication 5,
dans laquelle les données fournies par l'au moins un dispositif électronique externe (1, 20) comprennent un ensemble complet de paramètres de processus de boisson personnalisés pour la préparation de boisson, au moins un paramètre de boisson personnalisé, ou des données de référence pour se référer à une table de consultation supplémentaire avec de multiples ensembles de paramètres pour la préparation de boisson stockés dans l'unité de stockage (19) de la machine (10).

7. Machine de préparation de boisson selon l'une quelconque des revendications précédentes,
dans laquelle, dans le deuxième mode (B), l'unité de commande (15) est conçue pour communiquer avec un dispositif de stockage électronique externe (20) et un dispositif de commande électronique externe (1) et pour reconfigurer ou remplacer des données stockées sur le dispositif de stockage électronique externe (20) sur la base d'une entrée utilisateur au niveau de la machine (10) et/ou sur la base de données fournies par le dispositif de commande électronique externe (1).

8. Machine de préparation de boisson selon la revendication 7,
dans laquelle le dispositif de stockage électronique externe (20) est une étiquette RFID, en particulier une étiquette NFC, de préférence intégrée ou attachée à un réceptacle de boisson (21) et le dispositif de commande électronique externe (1) est un dispositif portatif tel qu'un téléphone intelligent.

9. Machine de préparation de boisson selon l'une quelconque des revendications précédentes,
dans laquelle l'unité de commande (15) est conçue pour fonctionner au moins dans un troisième mode (C) en fonction de la connexion d'un module amovible (40) tel qu'un module de lait ou un mousseur à lait à la machine de préparation de boisson (10).

10. Machine de préparation de boisson selon l'une quelconque des revendications précédentes,
dans laquelle l'unité de réseau (17) comprend une interface sans fil telle qu'un réseau local sans fil (WLAN), une interface de réseau Bluetooth, WiFi ou de communication en champ proche et/ou un lecteur RFID.

11. Machine de préparation de boisson selon l'une quelconque des revendications précédentes,
dans laquelle la machine de préparation de boisson (10) est conçue pour, automatiquement ou lors d'une demande d'utilisateur, obtenir, par l'intermédiaire de l'unité de réseau (17) une connexion de réseau à une ressource distante (30a) telle qu'un serveur en nuage pour un transfert de données.

12. Machine de préparation de boisson selon la revendication 11,
dans laquelle la machine de préparation de boisson (10) est configurée pour récupérer de manière sélective et/ou automatique des recettes de préparation de boisson (54) comprenant des paramètres de processus de boisson à partir de la ressource distante (30a).

13. Système (100) comprenant une machine de préparation de boisson (10) selon l'une quelconque des revendications 1 à 12 et un dispositif de commande électronique (1) comprenant un programme informatique exécutable sur ledit dispositif de commande électronique (1), ledit programme étant configuré pour :
obtenir par l'intermédiaire d'une unité de réseau (3) du dispositif de commande électronique (1) une connexion de réseau à ladite machine de préparation de boisson (10),
afficher une interface de commande (50) pour recevoir une pluralité d'entrées provenant d'un utilisateur afin de déterminer des paramètres de processus de boisson optimisés et/ou personnalisés pour un processus de préparation de boisson avec la machine de préparation de boisson (10),
dans lequel les entrées d'utilisateur comprennent la sélection d'une recette de boisson prédéfinie (54) à partir d'une pluralité de recettes de boisson et
dans lequel les entrées d'utilisateur comprennent en outre le réglage de paramètres de boisson personnalisés afin de personnaliser ladite recette de boisson prédéfinie (54) destinée à être transmise à la machine de préparation de boisson (10) et/ou à un dispositif de stockage électronique externe (20) mis en réseau avec la machine.

14. Système selon la revendication 13, comprenant en outre un dispositif de stockage électronique externe (20) tel qu'une étiquette RFID, ladite étiquette RFID étant par exemple intégrée dans ou attachée à un réceptacle de boisson (21) pour recevoir une boisson préparée par la machine (10).
